# EUROPEAN PATENT SPECIFICATION

(11) **EP 0 816 394 B1**
(45) Date of publication and mention of the grant of the patent: **30.01.2002**
(21) Application number: 96430008.1
(22) Date of filing: 26.06.1996
(51) Int. Cl.: C08F 10/00, C08F 2/34

(54) **Process for polymerising ethylene in the gas phase**
Verfahren zur Ethylenpolymerisation in der Gasphase
Procédé de polymérisation de l'éthylène en phase gazeuse

(43) Date of publication of application: 07.01.1998
(73) Proprietor: BP Chemicals S.N.C., Cergy St. Christophe, 95866 Cergy Pontoise Cedex (FR); BP Chemicals Limited, London EC2M 7BA (GB)
(72) Inventor: Maddox, Peter James, 13500 Martigues (FR); Williams, Peter Sefton, Route de Galice, 13090 Aix en Provence (FR)
(74) Representative: Lassalle, Pierre-Dominique

(56) References cited:
- EP-A- 0 433 990
- EP-A- 0 447 035
- WO-A-93/13143
- WO-A-93/19104
- WO-A-94/03506
- WO-A-95/07943

## Description

The present invention relates to a process for the polymerisation of olefins and in particular to a process for the homopolymerisation of ethylene or copolymerisation of ethylene and alpha-olefins in the gas phase by use of a prepolymerised catalyst.

Traditional olefin polymerisation catalysts have been based on transition metal salts of Group IV to VIII metals in combination with base metal alkyls of Group I to III metals. Such catalysts known as Ziegler-Natta catalysts have been used to polymerise olefins in solution, slurry and gas phase processes. Another catalyst system used for polymerisation of olefins is based on chromium oxide and is often referred to as Phillips-type catalyst system.

A problem encountered when such catalyst systems have been used in the gas phase has been the control of the morphology of the polymer produced. The morphology of polymers produced in the gas phase has been improved by use of prepolymerisation processes in which typically in a first stage the contact between one or more olefins with the Ziegler-Natta catalyst results in the formation of a prepolymer in the form of solid particles. In a second stage the prepolymer is contacted with one or more olefins under polymerisation conditions in the gas phase to produce polymers directly in the form of powders. In this way the morphology of the final polymer may be improved. A typical prepolymerisation process is described in EP 99774.

Catalysts based on metallocene complexes have also been widely used for the polymerisation of olefins. These complexes are used in catalyst systems comprising a bis(cyclopentadienyl) transition metal and a cocatalyst. Such bis (Cp) transition metal complexes are referred to as metallocenes and are typically based on titanium or zirconium metals and when used are cocatalysed with aluminium compounds such as aluminoxanes. When used in gas phase processes such bis (Cp) metallocene systems may be supported on silica.

More recently another type of transition metal complex has been used to prepare olefin polymers. Such complexes have a single cyclopentadienyl ring ligand and a hetero atom bonded to the metal atom and may also be used in conjunction with aluminoxanes. Such 'constrained geometry' catalysts are described in EP 420436 and EP 416815.

Similar catalyst systems are taught in EP 418044 and WO 92/00333. In these systems the catalyst is prepared as the product of a mono(cyclopentadienyl) heteroatom metal complex and an ionic activator compound and such systems have been referred to as ionic mono(cyclopentadienyl) catalysts. Typical ionic activators for such systems may be exemplified by borates or boranes.

The complexes described above may be optionally prepolymerised. For example WO 93/234319 describes supported bis (Cp) metallocene catalyst systems, activated with alumoxanes which may be optionally prepolymerised in order to impart improved catalyst particle strength. Further examples of the use of prepolymerisation with such bis (Cp) metallocene complexes may be found in EP 452920, EP 516458, EP 582480 and EP 605952.

WO 94/03506 describes supported ionic catalysts based on mono (cyclopentadienyl) complexes and ionic activators which may also be optionally prepolymerised in order to achieve improved particle strength and size and reduced reactor fouling during polymerisation.

WO 94/28034 describes supported bridged bis (Cp) metallocene catalysts in which prepolymerisation reduces the reactor fouling tendencies of the catalyst and enhances the particle morphology control of the final polymer formed.

WO 96/00243 describes chiral metallocenes for the production of highly isotactic polypropylene copolymers in which prepolymerisation is found to improve particle morphology.

In all these systems the valency of the transition metal in the metallocene complex is in either the +3 or more usually in the highest oxidation state of+4.

WO 95/00526 describes titanium or zirconium complexes in which the transition metal is in the +2 formal oxidation state. The complex also comprises a neutral, conjugated or non-conjugated diene ligand which forms a π-complex with the metal. Such complexes are rendered catalysts by combination with an activating cocatalyst for example aluminoxanes, boranes or borates. When used in a gas phase process these catalysts are suitably supported on silica. However there is no mention of prepolymerisation as an option when using such catalyst systems in the gas phase.

Accordingly in the above complexes when prepolymerisation has been suggested it is in order to either reduce reactor fouling or to improve the morphology of the final polymer both advantages typically claimed with the earlier Ziegler-Natta or chromium systems.

We have now found that prepolymersation in the presence of such complexes may be advantageously performed in the dry phase, for example in an agitated dry phase reactor.

In particular we have now found that the catalytic activity of certain constrained geometry catalysts in the gas phase may be improved by use of an initial prepolymerisation step performed at low temperature (with respect to the final polymerisation temperature) either in a separate stage or in-situ prior to the final polymerisation stage.

Thus according to the present invention there is provided a process for polymerising ethylene or copolymerising ethylene and one or more alpha-olefins in the gas phase comprising:-
(1) in a first stage prepolymerising ethylene or ethylene and one or more alpha-olefins in the gas phase at a temperature in the range 20 to 70°C in the presence of a catalyst system comprising (a) a supported constrained geometry complex and (b) an activator, and
(2) in a second stage polymerising ethylene or ethylene and one or more alpha-olefins in the gas phase at a temperature in the range 65 to 100 °C in the presence of the prepolymer obtained from said first stage.

The term constrained geometry complex will be readily understood by one skilled in the art to mean complexes in which the metal atom is forced into greater exposure of the active metal site because of one or more substituents on the delocalised π bonded moiety. Such complexes are described in detail in EP 416815.

The process of the present invention may be performed in a single gas phase reactor in which both stages are performed or the prepolymer from the first stage may be recovered before use in the final polymerisation.

The prepolymerisation stage is most preferably carried out at a temperature in the range 25 to 40 °C and the final polymerisation stage at a preferred temperature in the range 70 to 85°C.

During the prepolymerisation stage the pressure is typically in the range 0.1 to 10 bar. In the final polymerisation stage the pressure is increased and is typically in the range 5 to 20 bar.

Titanium (II) or zirconium (II) complexes are particularly suitable for use in the process of the present invention. Such complexes are disclosed in the aforementioned WO 95/00526. The complexes have the general formula:- 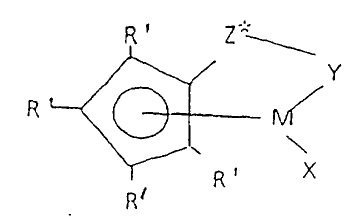 wherein:
R' each occurrence is independently selected from hydrogen, hydrocarbyl, silyl, germyl, halo, cyano, and combinations thereof, said R' having up to 20 non hydrogen atoms, and optionally, two R' groups (where R' is not hydrogen, halo or cyano) together form a divalent derivative thereof connected to adjacent positions of the cyclopentadienyl ring to form a fused ring structure;
X is a neutral η⁴- bonded diene group having up to 30 non-hydrogen atoms, which forms a π-complex with M;
Y is -O-, -S-, -NR*-, -PR*-;
M is titanium or zirconium in the +2 formal oxidation state;
Z* is SiR₂, CR*₂, SiR*₂SiR*₂, CR*₂CR*₂, CR* = CR*, CR₂SiR*₂, or GeR*₂; wherein:
R* each occurrence is independently hydrogen, or a member selected from hydrocarbyl, silyl, halogenated alkyl, halogenated aryl, and combinations thereof, said R* having up to 10 non-hydrogen atoms, and optionally, two R* group from Z* (when R* is not hydrogen), or an R* group from Z* and an R* group from Y form a ring system.

Most preferred complexes are amidosilane or amidoalkanediyl complexes wherein the metal is titanium.

Highly preferred diene groups are 1,4-diphenyl-1,3-butadiene, 1,3-pentadiene, 1,4-dibenzyl- 1,3-butadiene, 3-methyl-1,3-pentadiene.

Illustrative but not limiting examples of complexes preferred are (tert-butylamido) (tetramethyl-η⁵-cyclopentadienyl) dimethylsilane titanium (II) 1,4-diphenyl-1,3-butadiene,
(tert-butylamido) (tetramethyl-η⁵-cyclopentadienyl) dimethyl silane titanium (II) 1,3-pentadiene,
(tert-butylamido) (2-methylindenyl) dimethylsilanetitanium (II) 1,4-diphenyl-1,3-butadiene.

These complexes are rendered catalytically active by combination with an activating cocatalyst. Suitable cocatalysts include aluminoxanes, especially methylaluminoxane (MAO) or strong Lewis acids eg tri (hydrocarbyl) boron compounds or halogenated derivatives.

A particularly preferred activator is tris (pentafluorophenyl) boron.

Other complexes suitable for use in the process of the present invention are those in which the metal is in a higher valency state. Such complexes are disclosed in EP 416815 and WO 91/04257. The complexes have the general formula: 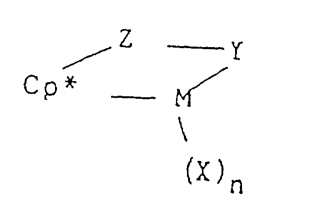 wherein:
Cp* is a single η⁵-cyclopentadienyl or η⁵-substituted cyclopentadienyl group optionally covalently bonded to M through -Z-Y- and corresponding to the formula: 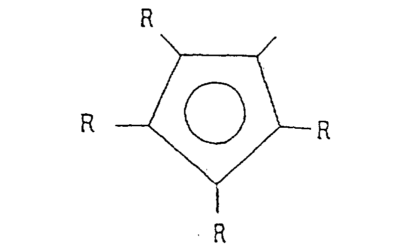 wherein R each occurrence is hydrogen or a moiety selected from halogen, alkyl, aryl, haloalkyl, alkoxy, aryloxy, silyl groups, and combinations thereof of up to 20 non-hydrogen atoms, or two or more R groups together form a fused ring system;

M is zirconium, titanium or hafnium bound in an η⁵ bonding mode to the cyclopentadienyl or substituted cyclopentadienyl group and is in a valency state of +3or +4.

X each occurrence is hydride or a moiety selected from halo, alkyl, aryl, silyl, germyl, aryloxy, alkoxy, amide, siloxy, and combinations thereof (e.g. haloalkyl, haloaryl, halosilyl, alkaryl, aralkyl, silylalkyl, aryloxyaryl, and alkyoxyalkyl, amidoalkyl, amidoaryl) having up to 20 non-hydrogen atoms, and neutral Lewis base ligands having up to 20 non-hydrogen atoms;
n is 1 or 2 depending on the valence of M;
Z is a divalent moiety comprising oxygen, boron, or a member of Group 14 of the Periodic Table of the Elements;
Y is a linking group covalently bonded to the metal comprising nitrogen, phosphorus, oxygen or sulfur, or optionally Z and Y together form a fused ring system.

Most preferred complexes are those wherein Y is a nitrogen or phosphorus containing group corresponding to the formula (-NR¹) or (-PR¹) wherein R¹ is C₁-C₁₀ alkyl or C₆-C₁₀ aryl and wherein Z is SiR"₂, CR"₂, SiR"₂ SiR"₂, CR"=CR" or GeR"₂ in which R" is hydrogen or hydrocarbyl.

Most preferred complexes are those wherein M is titanium or zirconium.

Illustrative, but not limiting examples of suitable complexes are (tert-butylamido) (tetramethyl-η⁵-cyclopentadienyl) dimethyl silanetitanium dimethyl, (tert-butylamido) dibenzyl (tetramethyl-η⁵-cyclopendienyl) silane zirconium dibenzyl, (benzylamido) dimethyl (tetramethyl-η⁵-cyclopentadienyl) silane titanium dichloride, (phenylphosphido) dimethyl (tetramethyl-η⁵-cyclopentadienyl) silane zirconium dibenzyl and the like.

These complexes are rendered catalytically active by combination with an activating cocatalyst. Suitable cocatalysts include aluminoxanes, especially methylaluminoxane (MAO) or strong Lewis acids eg tri (hydrocarbyl) boron compounds or halogenated derivatives .

Particularly suitable as an activator is tris (pentafluorophenyl) boron.

The molar ratio of complex to activator employed in the process of the present invention may be in the range 1:10000 to 100:1. A preferred range is from 1:5000 to 10:1 and is most preferred in the range 1:10 to 1:1.

The complexes according to the process of the present invention for use in the gas phase are supported.

Typically the support can be any organic or inorganic inert solid. particularly porous supports such as talc, inorganic oxides and resinous support materials such as polyolefins. Suitable inorganic oxide materials which may be used include Group 2, 13, 14 or 15 metal oxides such as silica, alumina, silica-alumina and mixtures thereof. Other inorganic oxides that may be employed either alone or in combination with the silica, alumina or silica-alumina are magnesia, titania or zirconia. Other suitable support materials may be employed such as finely divided polyolefins such as polyethylene.

The most preferred support material for use with the supported catalysts according to the process of the present invention is silica.

It is preferable that the silica is dried before use and this is typically carried out by heating at elevated temperatures for example betweeen 200 and 850 deg.C.

In a preferred protocol the supported catalyst may be prepared by addition of a solution of the activator in a suitable solvent to a slurry of activated silica treated with a trialkylaluminium compound followed by addition of a solution of the metallocene complex in the same solvent. Alternatively the complex may be added to the trialkylaluminium treated silica before addition of the activator.

A suitable solvent for the preparation of the supported catalyst is toluene.

Suitable trialkylaluminium compounds are trimethylaluminium (TMA), triethlyaluminium(TEA) or triisobutylaluminium (TIBAL).

The process according to the present invention is suitable for use in the polymerisation of olefins in particularly in the homopolymerisation of ethylene or the copolymerisation of ethylene with other alpha-olefins in particular those having from 3 to 10 carbon atoms. Most preferred alpha-olefins are 1-butene, 1-hexene and 4-methyl-1-pentene.

The process may be carried out in any suitable gas phase process but is particularly suitable for use with gas phase processes carried out in a fluidised bed reactor. A most preferred process is that described in WO 94/28032. Other suitable gas phase processes are decribed in EP 89691, WO 94/25495 and WO 94/25497.

Using the process according to the present invention polymers may be prepared having densities in the range from 0.905 to 0.960 g/cc and a melt index in the range 0.1 to 20 according to ASTM D1238 condition E (2.16 kg. at 190 deg.C).

The process of the present invention will now be further illustrated by reference to the following examples. The examples clearly show that by use of the prepolymerisation stage either separately or in-situ results in an improvement in the activity of the constrained geometry catalyst systems.

### EXAMPLES

### Example 1 Preparation of catalyst A

10g of Crosfield ES70 silica (activated at 500°C) were slurried in 50ml dry hexane. 30ml of 0.5M TMA in hexane were added (1.5 mmol Al/g silica), and the slurry agitated for 2 hours. The treated silica was filtered and washed three times with 20ml of hexane, then dried in vacuo to a fine powder.

2g of the TMA treated ES70 silica were slurried in 10ml of dry toluene. 1.95ml of a 7.85 wt% solution of tris(pentafluorophenyl)boron in toluene were added, and the mixture shaken vigorously. Then 0.62 ml of a 12.25 wt% solution of (tert-butylamido) (tetramethyl-η⁵-cyclopentadienyl) dimethylsilanetitanium dimethyl in toluene were added. The mixture was shaken well, and then the solvent removed in vacuo at 20°C to give an yellow powder.

### Example 2 Preparation of catalyst B

7.0kg of Crosfield ES70 silica (activated at 500°C) were slurried in 100 litres of hexane. 9.32 litres of 0.976M TEA in hexane were added (1.5 mmol Al/g silica), and the slurry agitated for 2 hours at 30°C. The silica was allowed to settle, and the supernatant hexane removed. The silica was further washed with hexane, until the concentration of A1 in the washing had reached < 1mmol Al/litre. Then the silica was dried in vacuo at 40°C.

3g of the TEA treated ES70 silica were slurried in 15ml of dry toluene. 1.8ml of a 7.85wt% solution of tris(pentafluorophenyl)boron in toluene were added, and the mixture shaken vigorously. Then 0.62ml of a 10.7wt% solution of (tert-butylamido) (tetramethyl-η⁵-cyclopentadienyl) dimethylsilanetitanium penta-1,3-diene in toluene were added. The mixture was shaken well, and then the solvent removed in vacuo at 20°C to give an olive green powder.

### Example 3 Preparation of catalyst C

50g of the TEA treated ES70 silica, described for the preparation of Catalyst B, were slurried in 150ml of dry toluene. 10.4ml of a 10.7wt% solution of (tert-butylamido) (tetramethyl-η⁵-cyclopentadienyl)dimethylsilanetitanium penta-1,3-diene in toluene were added, and the mixture shaken vigorously. Then 29.4ml of a 7.85wt% solution oftris(pentafluorophenyl)boron in toluene were added. The mixture was shaken well, and then the solvent removed in vacuo at 40°C to give an olive green powder.

### Example 4 Preparation of catalyst D

10g of the TEA treated ES70 silica, described for the preparation of Catalyst B, were slurried in 50ml of dry toluene. 2.1ml of a 10.7wt% solution of (tert-butylamido) (tetramethyl-η⁵-cyclopentadienyl)dimethylsilanetitanium penta-1,3-diene in toluene were added, and the mixture shaken vigorously. Then 5.9ml of a 7.85wt% solution of tris(pentafluorophenyl)boron in toluene were added. The mixture was shaken well, and then the solvent removed in vacuo at 20°C to give an olive green powder.

### Example 5 Preparation of catalyst E

45.76g of the TEA treated ES70 silica, described for the preparation of Catalyst B, were slurried in 225 ml of dry toluene. 9.51ml of a 10.7wt% solution of (tert-butylamido)(tetramethyl-η⁵ cyclopentadienyl)dimethylsilanetitanium penta-1,3-diene in toluene were added, and the mixture shaken well. Then 26.9ml of a 7.85wt% solution of tris(pentafluorophenyl)boron in toluene were added. The mixture was shaken well, and then the solvent removed in vacuo at 20°C to give an olive green powder.

### Example 6 Preparation of prepolymer of catalyst C

A 2.5 litre volume agitated dry phase reactor was baked out at 85°C under a N₂ purge. It was cooled to 25°C, and 44.41g of catalyst Catalyst C was added to the reactor. It was pressurised to 0.47 bar with N₂. The catalyst was agitated at 300rpm. 0.30bar of C₂H₄ added, but this was quickly reduced to 0.08 bar to maintain the temperature of the reactor below 40°C. This was continued for 126 minutes. 34.0g of polymer-coated catalyst was recovered under N₂ from the reactor. The polymer yield was 0.5g PE/g catalyst.

### Example 7 Preparation of prepolymer of catalyst E

A 2.5 litre volume agitated dry phase reactor was baked out at 85°C under a N₂ purge. It was cooled to 25°C, and 46.3g of catalyst Catalyst E was added to the reactor. The reactor was pressurised to 1.05bar with N₂. The catalyst was agitated at 325rpm. C₂H₄ was added to the reactor to give a total pressure of 1.25bar. These conditions were maintained for 3.75 hours. Then the reactor was purged with N₂, sealed under 1bar N₂ and left overnight for 16 hours.

C₂H₄ was again added to the reactor to give a total pressure of 1.25 bar. 50 minutes after start-up, the pressure was increased to 1.30bar, and 5 hours after start-up, increased further to 1.42 bar. After 6 hours of polymerisation, the reactor was purged with N₂ and 68. 1g of polymer-coated catalyst was recovered under N₂. The polymer yield was 2.0g PE/g catalyst.

### Example 8 In-situ prepolymerisation of catalyst A

285g of NaCl was added to a 2.5 litre volume agitated dry phase reactor, which had been previously baked out at 85°C under a N₂ purge. 1.67g of a TEA treated silica was added to the reactor, and this was agitated for 15 minutes. The temperature was reduced to 30°C, and 7 bar of C₂H₄ was admitted to the reactor. Then a mixture of 0.22g of Catalyst A and 1.04g of a TEA treated silica was injected into the reactor with high pressure N₂. The pressure of C₂H₄ was maintained at a pressure of 7 bar rapidly ramped at 80°C, and maintained at this temperature for the rest of the test. The total polymerisation time was 120 minutes. The reactor was vented and cooled, and 127g of polymer was recovered, giving a catalyst activity of 41g/g.h bar.

### Comparative Example 1

A similar protocol of Example 8 was followed, except that the initial 30 minute period at 30°C was omitted. A mixture of 0.243g of Catalyst A and 0.935g of a TEA treated silica was injected at a temperature of 70°C, then the temperature immediately increased to 80°C. The run time was 127g of 100 minutes. 64g of polymer was recovered, giving a catalyst activity of 20.5g/g.h.bar.

Comparison between example 8 and comparative example 1 demonstrates that the in situ prepolymerisation in the agitated dry phase reactor results in a greater homopolymerisation catalyst activity.

### Example 9 In-situ prepolymerisation of catalyst B

320g of NaCl was added to a 2.5 litre volume agitated dry phase reactor, which had been previously baked out at 85°C under a N₂ purge. 1.25g of a TIBAL treated silica was added to the reactor, and this was agitated for 15 minutes. The temperature was reduced to 30°C, and 1 bar of C₂H₄ was admitted to the reactor. Then a mixture of 0.308g of Catalyst B and 0.825g of TIBAL treated silica was injected into the reactor with high pressure N₂. The pressure of C₂H₄ was maintained at a pressure of 1 bar and 5 minutes, then the pressure increased rapidly to 6.5 bar and the temperature ramped rapidly to 70°C. Then H₂ and 1-hexene was admitted to the reactor. The temperature, C₂H₄ pressure and H₂ and 1-hexene levels were maintained constant during the rest of the test. The total polymerisation time was 191 minutes. During the test, the average H₂/C₂H₄ ratio was 0.0046 and the average 1-hexene/C₂H₄ ratio was 0.0052. The reactor was vented and cooled, and 278g of polymer was recovered, giving a catalyst activity of 43.6g/g.h.bar. The polymer MI_{2 16} was 7.41 and the density 0.926 g/ml.

### Example 10 In-situ prepolymerisation of catalyst B

288g of NaCl was added to a 2.5 litre volume agitated dry phase reactor, which had been previously baked out at 85°C under a N₂ purge. 1.30g of a TIBAL treated silica was added to the reactor, and this was agitated for 15 minutes. The temperature was reduced to 30°C, and 1 bar of C₂H₄ was admitted to the reactor. Then a mixture of 0.238g of Catalyst B and 0.725g of a TIBAL treated silica was injected into the reactor with high pressure N₂. The pressure of C₂H₄ was maintained at a pressure of 1 bar for 5 minutes, then the pressure increased rapidly to 6.5 bar and the temperature ramped rapidly to 80°C. Then H₂ and 1-hexene were admitted to the reactor. The temperature, C₂H₄ pressure and H₂ and 1-hexene levels were maintained constant during the rest of the test. The total polymerisation time was 116 minutes. During the test, the average H₂/C₂H₄ ratio was 0.0052 and the average 1-hexene/C₂H₄ ratio was 0.0049. The reactor was vented and cooled, and 99g of polymer was recovered, giving a catalyst activity of 33.1g/g.h.bar. The polymer MI₂₁₆ was 2.7 and the density 0.9185 g/ml.

### Example 11 In-situ prepolymerisation of catalyst B

305g of NaCl was added to a 2.5 litre volume agitated dry phase reactor, which had been previously baked out at 85°C under a N₂ purge. 1.20g of a TIBAL treated silica was added to the reactor, and this was agitated for 15 minutes. The temperature was reduced to 30°C, and 1 bar of C₂H₄ was admitted to the reactor. Then a mixture of 0.231g of Catalyst B and 0.912g of a TIBAL treated silica was injected into the reactor with high pressure N₂. The pressure of C₂H₄ was maintained at a pressure of 1 bar for 5 minutes, then the pressure increased rapidly to 6.5 bar and the temperature ramped rapidly to 70°C. Then H₂ and 1-hexene were admitted to the reactor. The temperature C₂H₄ pressure and H₂ and 1-hexene levels were maintained constant during the rest of the test. The total polymerisation time was 189 minutes. During the test, the average H₂/C₂H₄ ratio was 0.00395 and the average 1-hexene/C₂H₄ ratio was 0.0048. The reactor was vented and cooled, and 168g of polymer was recovered, giving a catalyst activity of 35.5g/g.h.bar. The polymer MI_{2 16} was 1.7 and the density 0.9295 g/ml.

### Comparative Example 2

A similar protocol to Examples 9, 10 and I were followed, except that the initial low temperature and pressure start-up was omitted. Thus 344g of NaCl was added to a 2.5 litre volume agitated dry phase reactor, which had been previously baked out at 85°C under a N₂ purge. 1.30g of a TIBAL treated silica was added to the reactor, and this was agitated for 15 minutes. The reactor was cooled to 70°C, and pressurised to 6.5 bar C₂H₄. Then H₂ and 1-hexene were admitted to the reactor. A mixture of 0.213g of Catalyst C and 0.781g of a TIBAL treated silica was injected into the reactor with high pressure N₂. The temperature, C₂H₄ pressure and H₂ and 1-hexene levels were maintained constant during the rest of the test. The total polymerisation time was 166 minutes. During the test, the average H₂/C₂H₄ ratio was 0.0038 and the average 1-hexene/C₂H₄ ratio was 0.0053. The reactor was vented and cooled, and 101g of polymer was recovered, giving a catalyst activity of 26.3 g/g.h.bar.

Comparison between examples 9, 10 and 11 with comparative example 2 demonstrates that the in situ prepolymerisation in the agitated dry phase reactor results in a greater copolymerisation catalyst activity.

### Example 12 Polymerisation with prepolymer of catalyst C

305g of NaCl was added to a 2.5 litre volume agitated dry phase reactor, which had been previously baked out at 85° under a N₂ purge. 1.225g of a TIBAL treated silica was added to the reactor, and this was agitated for 15 minutes. The reactor was cooled to 70°C, and pressurised to 6.5 bar C₂H₄. The H₂ and 1-hexene were admitted to the reactor. A mixture of 0.956g of prepolymer of catalyst C and 0.745g of a TIBAL treated silica was injected into the reactor with high pressure N₂. The temperature, C₂H₄ pressure and H₂ and 1-hexene were maintained constant during the rest of the test. The total polymerisation time was 127 minutes. During the test, the average H₂/C₂H₄ ratio was 0.00415 and the average 1-hexene/C₂H₄ ratio was 0.0057. The reactor was vented and cooled and 250g of polymer was recovered, giving an activity of 28.8g/g.h.bar based on the mass of the original catalyst.

### Example 13 Polymerisation with prepolymer of catalyst E

292g of NaCl was added to a 2.5 litre volume agitated dry phase reactor, which had been previously baked out at 85°C under a N₂ purge. 1.223g of a TIBAL treated silica was added to the reactor, and this was agitated for 15 minutes. The reactor was cooled to 70°C, and pressurised to 6.5 bar C₂H₄. Then H₂ and 1-hexene were admitted to the reactor. A mixture of 1.02g of prepolymer of catalyst E and 0.744g of a TIBAL treated silica was injected into the reactor with high pressure N₂. The temperature, C₂H₄ pressure and H₂ and 1-hexene levels were maintained constant during the rest of the test. The total polymerisation time was 127 minutes. During the test, the average H₂/C₂H₄ ratio was 0.0044 and the average 1-hexene C₂H₄ ratio was 0.0048. The reactor was vented and cooled, and 175g of polymer was recovered, giving an activity of 37.4g/g.h.bar based on the mass of the original catalyst.

### Example 14 Polymerisation with prepolymer of catalyst E

352g of NaCl was added to a 2.5 litre volume agitated dry phase reactor, which had been previously baked out at 85°C under a N₂ purge. 1.20g of a TIBAL treated silica was added to the reactor, and this was agitated for 15 minutes. The reactor was cooled to 60°C, and pressurised to 6.5 bar C₂H₄. Then H₂ and 1-hexene were admitted to the reactor. A mixture of 0.915g of prepolymer of catalyst E and 0.8g of a TIBAL treated silica was injected into the reactor with high pressure N₂. The temperature was taken rapidly to 70°C. The temperature, C₂H₄ pressure and H₂ and 1-hexene levels were maintained constant during the rest of the test. The total polymerisation time was 87 minutes. During the test, the average H₂/C₂H₄ ratio was 0.0044 and the average 1-hexene/C₂H₄ ratio was 0.0055. The reactor was vented and cooled, and 128g of polymer was recovered, giving an activity of 44.5 g/g.h.bar based on the mass of the original catalyst.

Examples 13 and 14 and comparative example 2 start from the same basic catalyst formulation (see above). They demonstrate that the effect of prepolymerising the catalyst prior to injection into the reactor results in greater catalyst activity.

## Claims

1. A process for polymerising ethylene or copolymerising ethylene and one or more alpha-olefins in the gas phase comprising:-
( I ) in a first stage prepolymerising ethylene or ethylene and one or more alpha-olefins in the gas phase at a temperature in the range 20 to 70°C in the presence of a catalyst system comprising (a) a supported constrained geometry complex and (b) an activator, and
(2) in a second stage polymerising ethylene or ethylene and one or more alpha-olefins in the gas phase at a temperature in the range 65 to 100 °C in the presence of the prepolymer obtained from said first stage.

2. A process according to claim 1 wherein the first stage is carried out at a temperature in the range 25-40°C and the second stage at a temperature in the range 70-85°C.

3. A process according to claim 1 or 2 wherein the first stage is carried out at a pressure in the range 0 1 to 10 bar

4. A process according to any of the preceeding claims wherein both stages are carried out in a single gas phase reactor.

5. A process according to any of the preceeding claims wherein the first stage is carried out in the dry phase.

6. A process according to any of the preceeding claims wherein the constrained geometry complex has the formula:- 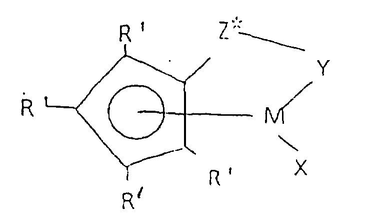 wherein
R' each occurrence is independently selected from hydrogen, hydrocarbyl, silyl, germyl, halo, cyano. and combinations thereof, said R' having up to 20 non hydrogen atoms, and optionally, two R' groups (where R' is not hydrogen, halo or cyano) together form a divalent derivative thereof connected to adjacent positions of the cyclopentadienyl ring to form a fused ring structure;
X is a neutral η⁴-bonded diene group having up to 30 non-hydrogen atoms, which forms a π-complex with M.
Y is -O-, -S-, -NR*-, -PR*-,
M is titanium or zirconium in the +2 formal oxidation state;
Z* is SiR₂, CR*₂, SiR*₂SiR*₂, CR*₂CR*₂, CR* = CR*, CR₂SiR*₂, or GeR*₂; wherein:
R* each occurrence is independently hydrogen, or a member selected from hydrocarbyl, silyl, halogenated alkyl, halogenated aryl, and combinations thereof, said R* having tip to 10 non-hydrogen atoms, and optionally, two R* group from Z* (when R* is not hydrogen), or an R* group from Z* and an R* group from Y form a ring system

7. A process according to claim 6 wherein the complex is:-
(tert-butylamido) (tetramethyl-η⁵-cyclopentadienyl) dimethyl silane titanium (II) 1,3-pentadiene,

8. A process according to claims 1-5 wherein the constrained geometry complex has the formula - 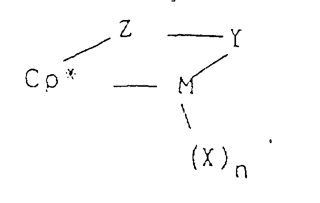 wherein
Cp* is a single η⁵-cyclopentadienyl or η⁵-substituted cyclopentadienyl group optionally covalently bonded to M through -Z-Y- and corresponding to the formula. 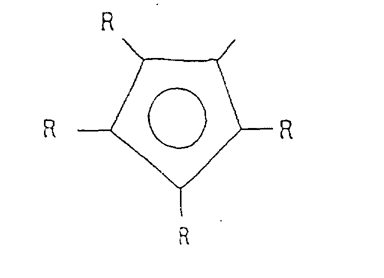
wherein R each occurrence is hydrogen or a moiety selected from halogen, alkyl, aryl, haloalkyl, alkoxy, aryloxy, silyl groups, and combinations thereof of up to 20 non-hydrogen atoms, or two or more R groups together form a fused ring system;
M is zirconium, titanium or hafnium bound in an η⁵ bonding mode to the cyclopentadienyl or substituted cyclopentadienyl group and is in a valency state of +3 or +4.
X each occurrence is hydride or a moiety selected from halo, alkyl, aryl, silyl, germyl, aryloxy, alkoxy, amide, siloxy, and combinations thereof (e.g. haloalkyl, haloaryl, halosilyl, alkaryl, aralkyl, silylalkyl, aryloxyaryl, and alkyoxyalkyl, amidoalkyl, amidoaryl) having up to 20 non-hydrogen atoms, and neutral Lewis base ligands having up to 20 non-hydrogen atoms,
n is 1 or 2 depending on the valence of M,
Z is a divalent moiety comprising oxygen, boron, or a member of Group 14 of the Periodic Table of the Elements,
Y is a linking group covalently bonded to the metal comprising nitrogen, phosphorus, oxygen or sulfur, or optionally Z and Y together form a fused ring system.

9. A process according to claim 8 wherein the complex is (tert-butylamido) (tetramethyl-η⁵- cyclopentadienyl) dimethylsilanetitanium dimethyl.

10. A process according to any of the preceeding claims wherein the complex is supported on silica.

11. A process according to any of the preceeding claims wherein the activator is tris(penta flurophenyl) boron

12. A process according to any of the proceeding claims wherein the ratio of complex to activator is in the range 1.10,000 to 100:1.

13. A process according to claim 12 wherein the ratio is in the range 1.10 to 1.1.

14. A process according to any of the proceeding claims wherein the alpha-olefins are 1-butene, 1-hexeue or 4-methyl-1-pentene.

## Patentansprüche

1. Verfahren zum Polymerisieren von Ethylen oder Copolymerisieren von Ethylen und einem oder mehreren α-Olefinen in der Gasphase, umfassend:
(1) in einer ersten Stufe Vorpolymerisieren von Ethylen oder von Ethylen und einem oder mehreren α-Olefinen in der Gasphase bei einer Temperatur im Bereich von 20 bis 70°C in Gegenwart eines Katalysatorsystems, umfassend (a) einen getragenen Komplex mit erzwungener Geometrie und (b) einen Aktivator; und
(2) in einer zweiten Stufe Polymerisieren von Ethylen oder von Ethylen und einem oder mehreren α-Olefinen in der Gasphase bei einer Temperatur im Bereich von 65 bis 100°C in Gegenwart des aus der ersten Stufe erhaltenen Vorpolymers.

2. Verfahren nach Anspruch 1, wobei die erste Stufe bei einer Temperatur im Bereich von 25-40°C und die zweite Stufe bei einer Temperatur im Bereich von 70-85°C ausgeführt wird.

3. Verfahren nach Anspruch 1 oder 2, wobei die erste Stufe bei einem Druck im Bereich von 0,1 bis 10 bar ausgeführt wird.

4. Verfahren nach einem der vorangehenden Ansprüche, wobei beide Stufen in einem einzigen Gasphasenreaktor ausgeführt werden.

5. Verfahren nach einem der vorangehenden Ansprüche, wobei die erste Stufe in der trockenen Phase ausgeführt wird.

6. Verfahren nach einem der vorangehenden Ansprüche, wobei der Komplex mit erzwungener Geometrie die Formel aufweist: 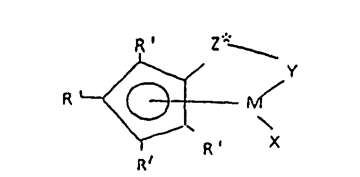 worin
R', jeweils unabhängig voneinander, ausgewählt ist aus Wasserstoff, Kohlenwasserstoff, Silyl, Germyl, Halogen, Cyano und Kombinationen davon, wobei die Gruppe R' bis zu 20 Nicht-Wasserstoff-Atome aufweist und gegebenenfalls zwei Gruppen R' (wobei R' nicht Wasserstoff, Halogen oder Cyano darstellt) zusammen ein zweiwertiges Derivat davon bilden, das mit benachbarten Positionen des Cyclopentadienylrings zur Bildung einer kondensierten Ringstruktur verbunden ist;
X eine neutrale η⁴-gebundene Diengruppe mit bis zu 30 Nicht-Wasserstoff-Atomen darstellt, die einen π-Komplex mit M bildet;
Y -O-, -S-, -NR*-, -PR*- darstellt;
M Titan oder Zirconium in dem formalen Oxidationszustand +2 darstellt;
Z* SiR₂, CR*₂, SiR*₂SiR*₂, CR*₂CR*₂, CR* = CR*, CR₂SiR*₂ oder GeR*₂ darstellt, worin:
R*, jeweils unabhängig voneinander, Wasserstoff oder ein Mitglied, ausgewählt aus Kohlenwasserstoff, Silyl, halogeniertem Alkyl, halogeniertem Aryl und Kombinationen davon, darstellt, wobei R* bis zu 10 Nicht-Wasserstoff-Atome aufweist und gegebenenfalls zwei Gruppen R* von Z* (wenn R* nicht Wasserstoff darstellt) oder eine Gruppe R* von Z* und eine Gruppe R* von Y ein Ringsystem bilden.

7. Verfahren nach Anspruch 6, wobei der Komplex ist:
(tert-Butylamido)(tetramethyl-η⁵-cyclopentadienyl)dimethylsilantitanium(II)-1,3-pentadien.

8. Verfahren nach Ansprüchen 1-5, wobei der Komplex mit erzwungener Geometrie die Formel aufweist: 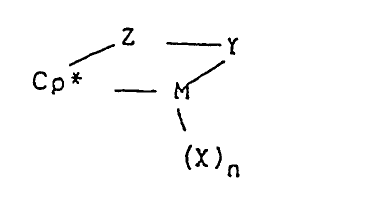 worin
Cₚ* eine einzige η⁵-Cyclopentadienyl- oder η⁵-substituierte Cyclopentadienylgruppe, gegebenenfalls kovalent an M durch -Z-Y- gebunden und entsprechend der Formel: 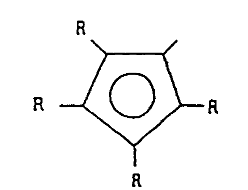 darstellt, worin R jeweils Wasserstoff oder eine Einheit, ausgewählt aus Halogen-, Alkyl-, Aryl-, Halogenalkyl-, Alkoxy-, Aryloxy-, Silylgruppen und Kombinationen davon, mit bis zu 20 Nicht-Wasserstoff-Atomen darstellt, oder zwei oder mehrere Gruppen R zusammen ein kondensiertes Ringsystem bilden;
M Zirconium-, Titan- oder Hafnium, gebunden in η⁵-Bindungsart an die Cyclopentadienyl- oder substituierte Cyclopentadienylgruppe, darstellt und in einem Wertigkeitszustand von +3 oder +4 vorliegt;
X jeweils Hydrid oder eine Einheit, ausgewählt aus Halogen, Alkyl, Aryl, Silyl, Germyl, Aryloxy, Alkoxy, Amid, Siloxy und Kombinationen davon (beispielsweise Halogenalkyl, Halogenaryl, Halogensilyl, Alkaryl, Aralkyl, Silylalkyl, Aryloxyaryl und Alkoxyalkyl, Amidoalkyl, Amidoaryl) mit bis zu 20 Nicht-Wasserstoff-Atomen und neutralen Lewis-Basen-Liganden mit bis zu 20 Nicht-Wasserstoff-Atomen, darstellt;
n 1 oder 2, in Abhängigkeit der Wertigkeit von M, ist;
Z eine zweiwertige Einheit, umfassend Sauerstoff, Bor oder ein Mitglied der Gruppe 14 des Periodensystems der Elemente, darstellt;
Y eine Bindungsgruppe, kovalent gebunden an das Metall, umfassend Stickstoff, Phosphor, Sauerstoff oder Schwefel, darstellt oder gegebenenfalls Z und Y zusammen ein kondensiertes Ringsystem bilden.

9. Verfahren nach Anspruch 8, wobei der Komplex (tert-Butylamido) (tetramethyl-η⁵-cyclopentadienyl)dimethylsilantitandimethyl darstellt.

10. Verfahren nach einem der vorangehenden Ansprüche, wobei der Komplex auf Siliziumdioxid getragen ist.

11. Verfahren nach einem der vorangehenden Ansprüche, wobei der Aktivator Tris(pentafluorphenyl)bor ist.

12. Verfahren nach einem der vorangehenden Ansprüche, wobei das Verhältnis von Komplex:Aktivator im Bereich von 1:10 000 bis 100:1 liegt.

13. Verfahren nach Anspruch 12, wobei das Verhältnis im Bereich 1:10 bis 1:1 liegt.

14. Verfahren nach einem der vorangehenden Ansprüche, wobei die α-Olefine 1-Buten, 1-Hexen oder 4-Methyl-1-penten darstellen.

## Revendications

1. Procédé pour la polymérisation d'éthylène ou la copolymérisation d'éthylène et d'une ou plusieurs alpha-oléfines en phase gazeuse, comprenant :
(1) dans une première étape, la prépolymérisation d'éthylène ou bien d'éthylène et d'une ou plusieurs alpha-oléfines en phase gazeuse à une température comprise dans l'intervalle de 20 à 70°C en présence d'un système de catalyseur comprenant (a) un complexe à géométrie sous contrainte fixé sur un support et (b) un activateur, et
(2) dans une seconde étape, la polymérisation d'éthylène ou bien d'éthylène et d'une ou plusieurs alpha-oléfines en phase gazeuse à une température comprise dans l'intervalle de 65 à 100°C en présence du prépolymère obtenu dans la première étape.

2. Procédé suivant la revendication 1, dans lequel la première étape est mise en oeuvre à une température comprise dans l'intervalle de 25 à 40°C et la seconde étape est mise en oeuvre à une température comprise dans l'intervalle de 70 à 85°C.

3. Procédé suivant la revendication 1 ou 2, dans lequel la première étape est mise en oeuvre à une pression comprise dans l'intervalle de 0,1 à 10 bars.

4. Procédé suivant l'une quelconque des revendications précédentes, dans lequel les deux étapes sont mises en oeuvre dans un seul réacteur à phase gazeuse.

5. Procédé suivant l'une quelconque des revendications précédentes, dans lequel la première étape est mise en oeuvre à sec.

6. Procédé suivant l'une quelconque des revendications précédentes, dans lequel le complexe à géométrie sous contrainte répond à la formule : 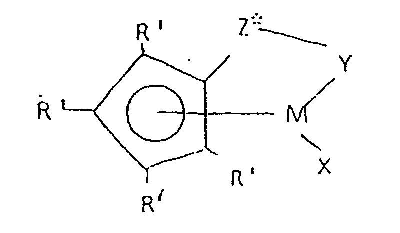 dans laquelle :
R', chaque fois qu'il est présent, est choisi indépendamment entre l'hydrogène, des groupes hydrocarbyle, silyle, germyle, halogéno, cyano et leurs associations, lesdits groupes R' ayant jusqu'à 20 atomes ne consistant pas en hydrogène et, facultativement, deux groupes R' (lorsque R' ne représente pas l'hydrogène, un groupe halogéno ou cyano), conjointement, forment un dérivé divalent de ces groupes connecté à des positions adjacentes du noyau cyclopentadiényle pour former une structure de noyau condensé ;
X représente un groupe diénique à liaison η⁴ neutre ayant jusqu'à 30 atomes ne consistant pas en hydrogène, qui forme un complexe π avec M ;
Y représente un groupe -O-, -S-, -NR*-, ou - PR*- ;
M représente le titane ou le zirconium à l'état d'oxydation formel + 2 ;
Z* représente un groupe SiR₂, CR*₂, SiR*₂SiR*₂, CR*₂CR*₂, CR* = CR*, CR₂SiR*₂ ou GeR*₂, dans lequel :
R*, chaque fois qu'il est présent, représente indépendamment l'hydrogène, ou un membre choisi dans le groupe consistant en des groupes hydrocarbyle, silyle, alkyle halogéné, aryle halogéné et leurs associations, ledit groupe R* ayant jusqu'à 10 atomes ne consistant pas en hydrogène et, facultativement, deux groupes R* de Z* (lorsque R* ne représente par l'hydrogène) ou bien un groupe R* de Z* et un groupe R* de Y forment un système de noyau.

7. Procédé suivant la revendication 6, dans lequel le complexe est :
le (tertiobutylamido) - (tétraméthyl-η⁵-cyclopentadiényl)-diméthylsilane-titane-(II)-1,3-pentadiène.

8. Procédé suivant les revendications 1 à 5, dans lequel le complexe à géométrie sous contrainte répond à la formule 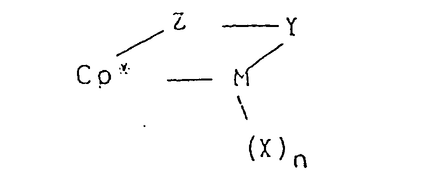 dans laquelle :
Cp* représente un groupe η⁵-cyclopentadiényle unique ou groupe cyclopentadiényle à substituant η⁵-facultativement lié par covalence à M par un groupe -Z-Y-, répondant à la formule : 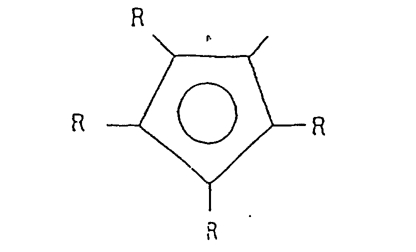 dans laquelle R, chaque fois qu'il est présent, représente l'hydrogène ou un groupement choisi entre des groupements halogéno, alkyle, aryle, halogénalkyle, alkoxy, aryloxy, silyle et leurs associations, comprenant jusqu'à 20 atomes ne consistant pas en hydrogène, ou bien deux ou plus de deux groupes R, conjointement, forment un système de noyau condensé ;
M représente le zirconium, le titane ou l'hafnium lié en mode de liaison η⁵ au groupe cyclopentadiényle ou cyclopentadiényle substitué et est à un état de valence + 3 ou + 4.
X, chaque fois qu'il apparaît, représente un hydrure ou un groupement choisi entre des groupements halogéno, alkyle, aryle, silyle, germyle, aryloxy, alkoxy, amide, siloxy et leurs associations (par exemple halogénalkyle, halogénaryle, halogénosilyle, alkaryle, aralkyle, silylalkyle, aryloxyaryle et alkyloxyalkyle, amidoalkyle et amidoaryle) ayant jusqu'à 20 atomes ne consistant pas en hydrogène, et des ligands consistant en bases de Lewis neutres ayant jusqu'à 20 atomes ne consistant pas en hydrogène ;
n est égal à 1 ou 2 en fonction de la valence de M ;
Z représente un groupement divalent comprenant de l'oxygène, du bore ou un membre du Groupe 14 du Tableau Périodique des Eléments ;
Y représente un groupe de liaison lié par covalence au métal, comprenant de l'azote, du phosphore, de l'oxygène ou du soufre, ou bien, facultativement, Z et Y, conjointement, forment un système de noyau condensé.

9. Procédé suivant la revendication 8, dans lequel le complexe est le (tertiobutylamido)-(tétraméthyl-η⁵-cyclopentadiényl)-diméthylsilanetitane-diméthyle.

10. Procédé suivant l'une quelconque des revendications précédentes, dans lequel le complexe est fixé sur un support consistant en silice.

11. Procédé suivant l'une quelconque des revendications précédentes, dans lequel l'activateur est le tris-(pentafluorophényl) -bore.

12. Procédé suivant l'une quelconque des revendications précédentes, dans lequel le rapport du complexe à l'activateur est compris dans l'intervalle de 1 : 10 000 à 100 : 1.

13. Procédé suivant la revendication 12, dans lequel le rapport est compris dans l'intervalle de 1 : 10 à 1 : 1.

14. Procédé suivant l'une quelconque des revendications précédentes, dans lequel les alpha-oléfines sont le 1-butène, le 1-hexène et le 4-méthyl-1-pentène.
